# EUROPEAN PATENT APPLICATION

(11) **EP 2 104 062 A2**
(43) Date of publication of application: **23.09.2009**
(21) Application number: 08172943.6
(22) Date of filing: 14.10.2005
(51) Int. Cl.: G06Q 10/00

(54) **Software mechanism for providing distinct types of time dependent event objects for display in a graphical user interface**

(62) Divisional of application: 05109598.2
(71) Applicant: Research In Motion Limited, Waterloo, Ontario N2L 3W8 (CA)
(72) Inventor: Zinn, Scotte, Waterloo Ontario N2L 5T9 (CA); May, Darrell Reginald, Waterloo Ontario N2V 2K6 (CA)
(74) Representative: MERH-IP Matias Erny Reichl Hoffmann

(57) **Abstract**

At a computing device such as a wireless communication device, a software component receives a set of constraints for selecting objects representative of time dependent event objects. The constraints may be generated automatically by a software module for displaying a visual representation of different types of time dependent events, e.g., in a GUI having a calendar-type view. The set of constraints may for example define a time range within which events occur or a maximum number of time dependent events occurring before or after a specified time. Each of a plurality of software objects maintaining a distinct set of time dependent event objects representing a distinct type of time dependent event provides a set of time dependent event objects meeting the set of constraints. The sets of time dependent event objects are merged into a time-ordered list based on a time-ordering criterion and provided to the software module for display.

## Description

The present invention pertains generally to software, and more particularly to a software mechanism for providing distinct types of time dependent event objects for display in a graphical user interface.

Many computing devices, such as personal digital assistants, mobile telephones and wireless communication devices, include a calendar or date book application which permits the user to schedule and review appointments. The graphical user interface (GUI) of such applications typically resembles a date book. Scheduled events may be viewable in various layouts, such as a day, week, or month view. A reminder feature may notify the user of an event as it draws near.

It would be desirable for such calendar or date book applications to be capable of displaying time dependent events of various types (e.g. tasks having deadlines, email messages with an "act-by" date, and other types of events), rather than only appointments. This would provide a convenient, "at a glance" view of various types of time dependent events in a single calendar-type layout. Moreover, it would be advantageous to display such events even if they are created using applications other than the calendar or date book application.

US6065012 discloses integrating predetermined data from one data module into a summary view HTML page of another module without invoking the full data module. US2005/039142 discloses simultaneously displaying calendar items from different calendars in a summary view.

### GENERAL

In one aspect of the present invention, there is preferably provided a computer-implemented method comprising: receiving a set of constraints for selecting objects representative of time dependent events; requesting, from each of a plurality of software objects, each software object maintaining a distinct set of time dependent event objects representing a distinct type of time dependent event, a set of time dependent event objects meeting said set of constraints; merging each said set of time dependent event objects into a time-ordered list based on a time-ordering criterion that is dependent on the represented type of time dependent event; and providing said time-ordered list to a software module for displaying, in a graphical user interface, a visual representation of the time dependent event objects of said time-ordered list.

A software object of said plurality of software objects may maintain a set of appointment event objects, each appointment event object containing a start time value and a stop time value, wherein said time-ordering criterion is said start time value.

A software object of said plurality of software objects may maintain a set of task event objects, each task event object containing a deadline, wherein said time-ordering criterion is said deadline.

In another aspect of the present invention, there is preferably provided a machine-readable medium containing code for execution at a computing device, said code being executable in a processor of said computing device for implementing the foregoing method.

The computing device may comprise a wireless communication device.

In another aspect of the present invention, there is preferably provided a computer program product comprising the foregoing machine readable medium.

In another aspect of the present invention, there is preferably provided a wireless communication device comprising the foregoing machine readable medium.

The executable code unit may comprise byte code. Each of said executable code units may comprise said plurality of software objects dynamically apprises the executable code unit effecting said receiving, said requesting, said merging and said providing of its existence by dynamically registering with the executable code unit effecting said receiving, said requesting, said merging and said providing. The dynamically registering may comprise performing run-time resolution of a routine of said executable code unit effecting said receiving, said requesting, said merging and said providing. The plurality of software objects from which said sets of time dependent event objects are requested may be determined based on a user indication of types of time dependent events for which display in said graphical user interface is desired. The set of constraints for displaying time dependent events may define a time range within which time dependent events are to occur. The set of constraints for displaying time dependent events defines a maximum number of time dependent events occurring prior to a specified time. The set of constraints for displaying time dependent events may be a maximum number of time dependent events occurring after a specified time. A first software object of said plurality of software objects may maintain a set of appointment event objects, each appointment event object containing a start time value and a stop time value. A second software object of said plurality of software objects may maintain a set of task event objects, each task event object containing a deadline. Each of said time dependent event objects of said ordered list may comprise a routine for drawing a visual representation of the time dependent event object based on its type, said visual representation being visually distinct from visual representations of time dependent event objects of other types

In another aspect of the present invention, there is preferably provided a communication system comprising a plurality of wireless communication devices in accordance with the invention.

Other aspects and features of the present invention will become apparent to those ordinarily skilled in the art upon review of the following description of specific embodiments of the invention in conjunction with the accompanying figures.

### BRIEF DESCRIPTION OF THE DRAWINGS

In the figures which illustrate example embodiments of this invention:

FIG. 1 is a schematic diagram illustrating a wireless communication device storing software which is exemplary of an embodiment of the present invention;

FIG. 2 is a schematic diagram illustrating various software applications stored in memory of the wireless communication device of FIG. 1;

FIG. 3 is a schematic diagram illustrating a calendar viewing application exemplary of an embodiment of the present invention stored in memory of the device of FIG. 1;

FIGS. 4A, 4B and 4C illustrates source code for a Java™ interface implemented by collection components of the calendar viewing application of FIG. 3;

FIG. 5 illustrates source code for a Java™ interface implemented by time dependent event objects of the calendar viewing application of FIG. 3;

FIGS. 6A and 6B illustrate source code for a Java™ interface which the interface of FIG. 5 extends;

FIGS. 7A-7D illustrate source code for a Java™ interface which the interface of FIG. 5 extends;

FIG. 8 illustrates operation by the calendar viewing application of FIG. 3 for displaying different types of time dependent events in a calendar view;

FIG. 9 illustrates lists of time dependent event objects created by the calendar viewing application of FIG. 3; and

FIG. 10 illustrates a graphical user interface of the calendar viewing application of FIG. 3.

### DESCRIPTION OF PREFERRED EMBODIMENTS

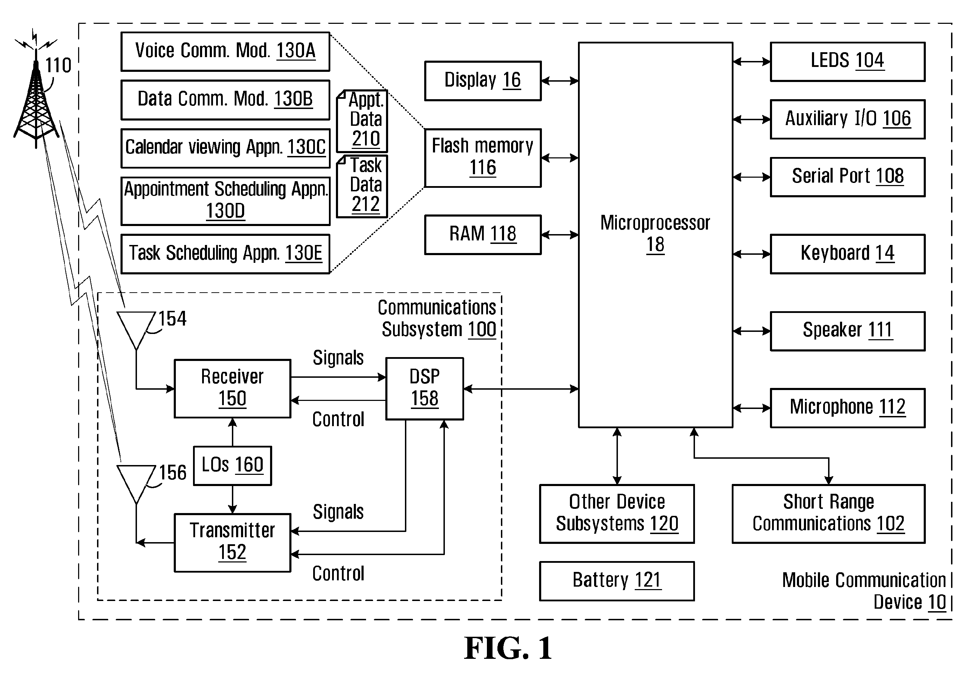

FIG. 1 illustrates a hand-held wireless communication device 10 including a housing, an input device, a keyboard 14, and an output device, a display 16, which may be a full graphic LCD. Other types of output devices may alternatively be utilized. A processing device, a microprocessor 18, is shown schematically in FIG. 1 as coupled between the keyboard 14 and the display 16. The microprocessor 18 controls the operation of the display 16, as well as the overall operation of the mobile device 10, in response to actuation of keys on the keyboard 14 by the user.

The housing may be elongated vertically, or may take on other sizes and shapes (including clamshell housing structures). The keyboard may include a mode selection key, or other hardware or software for switching between text entry and telephony entry.

In addition to the microprocessor 18, other parts of the mobile device 10 are shown schematically in FIG. 1. These include: a communications subsystem 100; a short-range communications subsystem 102; the keyboard 14 and the display 16, along with other input/output devices including a set of auxiliary I/O devices 106, a serial port 108, a speaker 111 and a microphone 112; as well as memory devices including a flash memory 116 and a Random Access Memory (RAM) 118; and various other device subsystems 120. The device 10 may have a battery 121 to power the active elements of the device. The mobile device 10 is preferably a two-way RF communication device having voice and data communication capabilities. In addition, the mobile device 10 preferably has the capability to communicate with other computer systems via the Internet.

Operating system software executed by the microprocessor 18 is preferably stored in a persistent store, such as the flash memory 116, but may be stored in other types of memory devices, such as a read only memory (ROM) or similar storage element. In addition, system software, specific device applications, or parts thereof, may be temporarily loaded into a volatile store, such as the RAM 118. Communication signals received by the mobile device may also be stored to the RAM 118.

The microprocessor 18, in addition to its operating system functions, enables execution of software applications (computer programs) 130A-130E on the device 10. A predetermined set of applications that control basic device operations, such as voice and data communications 130A and 130B, may be installed on the device 10 during manufacture. Memory 116 further contains a calendar viewing application 130C, an appointment scheduling application 130D, and a task scheduling application 130E, which may be installed during or after manufacture.

The calendar viewing application 130C is for displaying various types of time dependent events, such as appointments or tasks with deadlines for example, e.g. in a calendar-type view that is adjustable by the user (e.g. day, week, month etc.). As will be appreciated, the calendar viewing application 130C is capable of displaying various types of time dependent events, including events which are created using other dedicated applications, such as applications 130D and 130E (described below). The design of the application 130C, as well as applications 130D and 130E, which facilitates this capability is a focus of the present description.

The appointment scheduling application 130D is for creating and scheduling appointments in the electronic equivalent of an appointment book. The application 130D may have advanced appointment scheduling features, such as the ability to schedule recurring appointments (e.g. a one-hour meeting at 9 AM on the first Tuesday and Thursday of every month, except October, when only the Tuesday meeting should take place).

The task scheduling application 130E is for tracking tasks having specific deadlines. The application 130E may have a reminder feature which reminds a user that an appointment deadline is approaching.

In the present embodiment, each of the applications 130C, 130D and 130E is authored in the Java™ programming language, which is an object-oriented programming language.

Flash memory 116 also stores binary appointment data 210 and binary task data 212, as generated and stored by appointment scheduling application 130D and task scheduling application 130E respectively. Data 210 and 212 are essentially binary representations of appointments and task which have been scheduled using applications 130D and 130E respectively, e.g. as may be stored when those applications are exited by the user.

Communication functions, including data and voice communications, are performed by device 10 through the communication subsystem 100, and possibly through the short-range communications subsystem 102. The communication subsystem 100 includes a receiver 150, a transmitter 152, and one or more antennas 154 and 156. In addition, the communication subsystem 100 also includes a processing module, such as a digital signal processor (DSP) 158, and local oscillators (LOs) 160. The specific design and implementation of the communication subsystem 100 is dependent upon the communication network in which the mobile device 10 is intended to operate. For example, the communication subsystem 100 of the mobile device 10 may be designed to operate with the Mobitex™, DataTAC™ or General Packet Radio Service (GPRS) mobile data communication networks and may also be designed to operate with any of a variety of voice communication networks, such as AMPS, TDMA, CDMA, PCS, GSM, etc. Other types of data and voice networks, both separate and integrated, may also be utilized with the mobile device 10.

Network access requirements vary depending upon the type of communication system. For example, in the Mobitex™ and DataTAC™ networks, mobile devices are registered on the network using a unique personal identification number or PIN associated with each device. In GPRS networks, however, network access is associated with a subscriber or user of a device. A GPRS device therefore requires a subscriber identity module, commonly referred to as a SIM card, in order to operate on a GPRS network.

When required network registration or activation procedures have been completed, the wireless communication device 10 may send and receive communication signals over the communication network 110. Signals received from the communication network 110 by the antenna 154 are routed to the receiver 150, which provides for signal amplification, frequency down conversion, filtering, channel selection, etc., and may also provide analog-to-digital conversion. Analog-to-digital conversion of the received signal allows the DSP 158 to perform more complex communication functions, such as demodulation and decoding. In a similar manner, signals to be transmitted to the network 110 are processed (e.g. modulated and encoded) by the DSP 158 and are then provided to the transmitter 152 for digital-to-analog conversion, frequency up conversion, filtering, amplification and transmission to the communication network 110 (or networks) via the antenna 156.

In addition to processing communication signals, the DSP 158 provides for control of the receiver 150 and the transmitter 152. For example, gains applied to communication signals in the receiver 150 and transmitter 152 may be adaptively controlled through automatic gain control algorithms implemented in the DSP 158.

In a data communication mode, a received signal, such as a text message or web page download, is processed by the communication subsystem 100 and is input to the microprocessor 18. The received signal is then further processed by the microprocessor 18 for an output to the display 16, or alternatively to some other auxiliary I/O devices 106. A device user may also compose data items, such as email messages, using the keyboard 14 and/or some other auxiliary I/O device 106, such as a touchpad, a rocker switch, a thumb-wheel, or some other type of input device. The composed data items may then be transmitted over the communication network 110 via the communication subsystem 100.

In a voice communication mode, overall operation of the device is substantially similar to the data communication mode, except that received signals are output to a speaker 111, and signals for transmission are generated by a microphone 112. Alternative voice or audio I/O subsystems, such as a voice message recording subsystem, may also be implemented on the device 10. In addition, the display 16 may also be utilized in voice communication mode, for example to display the identity of a calling party, the duration of a voice call, or other voice call related information.

The short-range communications subsystem 102 enables communication between the mobile device 10 and other proximate systems or devices, which need not necessarily be similar devices. For example, the short-range communications subsystem may include an infrared device and associated circuits and components, or a Bluetooth™ communication module to provide for communication with similarly-enabled systems and devices.

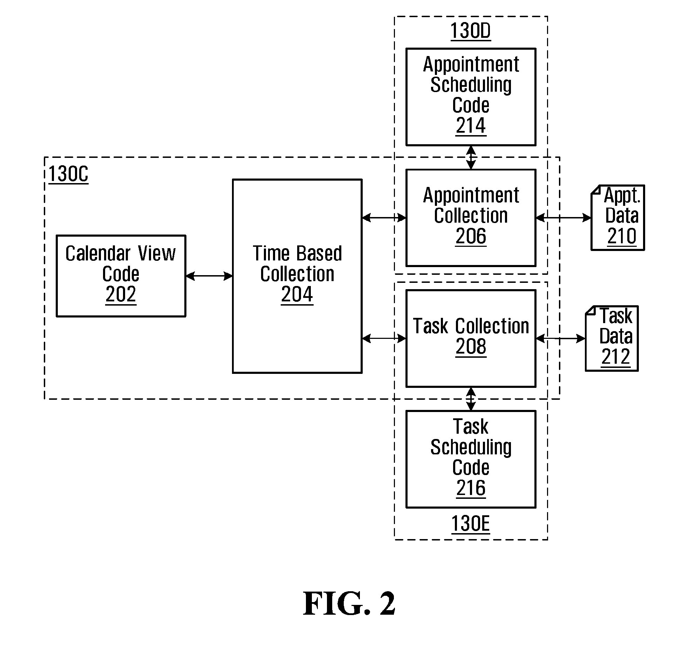

FIG. 2 schematically illustrates the relationship between the calendar viewing application 130C, appointment scheduling application 130D and task scheduling application 130E. As shown in FIG. 2., certain components of the applications 130C, 130D and 130E are shared, in order to facilitate the capacity of the calendar viewing application 130C to display different types of time dependent events (specifically, appointments and tasks) in the same view.

Calendar viewing application 130C has four primary components, namely, calendar display code 202, time based collection 204, appointment collection 206, and task collection 208.

Calendar display code 202 is a software module which is responsible for displaying a graphical user interface (GUI) to a user of the device 10. The GUI permits the user to select the types of time dependent events that should be displayed (e.g. tasks, appointments, or both). The GUI may also be configured by a user to display visual representations of time dependent events a calendar view of various granularities, e.g., day view, week view, month view, etc. Alternatively, the code 202 may be configured to display time dependent events in other types of views which may not strictly have a calendar-like appearance, such as an agenda view in which events are listed textually with time and date information in the form of a table.

The time based collection 204 is a software component which provides the calendar display code 202 with a list of time dependent events to be displayed. In one embodiment, the list takes the form of a (Java™) vector of event objects, where each event object is an instance of an event class. The collection 204 provides the list in response to a request from code 202 for events which meet a set of constraints, such as having a start time which falls within a specified time range. The specified time range may be based upon a calendar view that is currently displayed by the calendar display code 202. The time dependent events that are represented in the returned list are limited to the types of events which the user has elected to display in the calendar GUI. For example, when the user has elected to display both appointments and tasks in a calendar view, the list of events returned by collection 204 can include appointment event objects and task event objects. The list of events is created by merging lists of appointment events from the appointment collection 206 and task events from the task collection 208, as will be described.

The appointment collection 206 is a software object which maintains a set of appointments referred to as a collection. In the present embodiment, each appointment in the collection takes the form of an appointment event object, which is an instance of an object-oriented appointment event class. Appointment event objects are created, configured and destroyed in collection 206 in response to the execution of the separate appointment scheduling code 214 (described below). However, as will be appreciated, they are also provided to time based collection 204 in response to requests from collection 204 for appointment event objects meeting a specified set of constraints (such as falling within a specified time range). For this reason, the appointment collection 206 is illustrated in FIG. 2 as being part of both of the calendar viewing application 130C and the appointment scheduling application 130D.

The task collection 208 is analogous to the appointment collection 206 except that rather than maintaining appointment event objects like collection 206, task collection 208 maintains task event objects. These objects are created, configured and destroyed by the execution of task scheduling code 216 (described below). The task collection 208 is part of both of the calendar viewing application 130C and the task scheduling application 130E.

Appointment scheduling code 214 is a program which is responsible for displaying a GUI for creating and configuration appointments to a user of the device 10. The GUI may be different from the GUI displayed by calendar display code 202. For example, the GUI of code 214 may include appointment-specific controls, such as "set appointment location" or the like. As a user interacts with the GUI presented by code 214, the set of appointment event objects in appointment collection 206 may grow, shrink, or change, depending upon the user's actions. When the user instructs the code 214 to exit the appointment scheduling application 130D or to save appointments, the appointment event objects of collection 206 may be stored in the form of appointment data 210.

Task scheduling code 216 is analogous to appointment scheduling code 214, except that it pertains to tasks. The GUI presented by task scheduling code 216 may be entirely different from the GUI presented by the appointment scheduling code 214 or calendar display code 202.

In an exemplary embodiment, calendar display code 202 and time based collection 204 may cumulatively be an executable code unit which takes the form of a single Java™ bytecode file capable of execution by a Java™ virtual machine (JVM). Moreover, each of appointment collection 206, task collection 208, appointment scheduling code 214, and task scheduling code 216 may be executable code units comprising Java™ bytecode files which are each also capable of independent execution by the JVM. This approach contributes to the modularization of the applications, such that appointment collection 206 may be shared between appointment scheduling application 130D and calendar viewing application 130C, and task collection 208 may be shared between task scheduling application 130E and calendar viewing application 130C, as shown in FIG. 2.

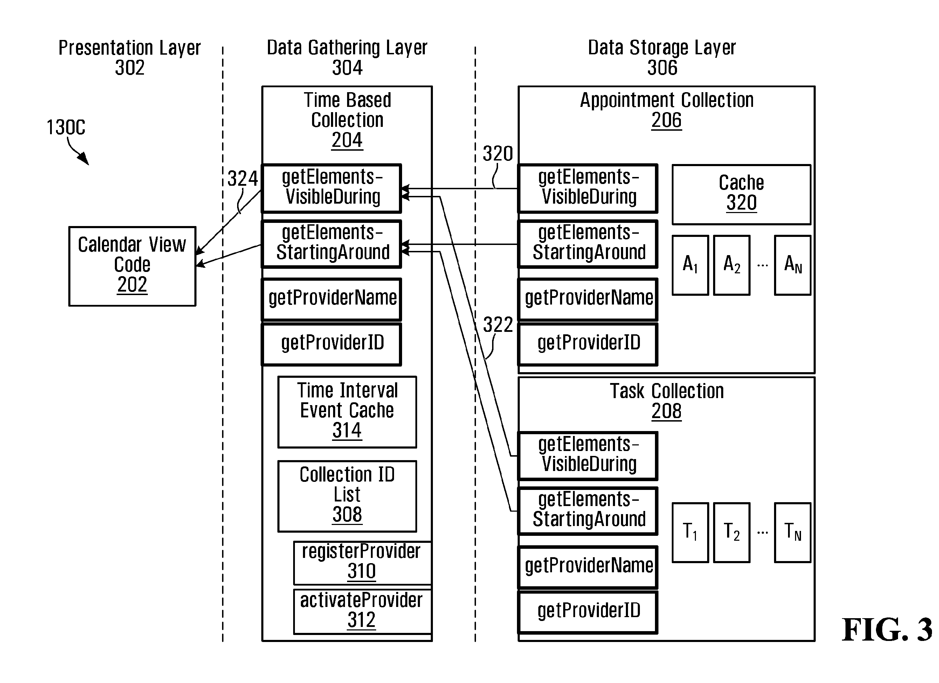

Referring to FIG. 3, the calendar viewing application 130C is illustrated in greater detail. FIG. 3 reflects the compartmentalization of application 130C into three layers, namely, presentation layer 302, data gathering layer 304, and data storage layer 306. As will become apparent, this compartmentalization facilitates the application's display of different types of time dependent events.

At the presentation layer 302, the calendar display code 202 software module is responsible for displaying a calendar GUI to the user and updating the display in response to the user's interaction with the GUI. In the context of this description, important user interactions include setting a particular time window in the calendar view and selecting the types of events that should be displayed in that view (e.g. appointments, tasks, or both). To display time dependent events in a currently displayed time window, the presentation layer 302 requests a list of event objects which occur during that time window from the data gathering layer 304. When the list is received, the presentation layer 302 instructs each event object, regardless of its type (e.g. appointment event object or task event object), to render itself in the proper location within the currently displayed view based on the event's start time, duration and the granularity of the currently selected time window. As will become apparent, the capacity of the presentation layer 302 to reliably achieve this behavior for each event object, regardless of type, is facilitated by the use of consistent object interfaces by each type of time dependent event object.

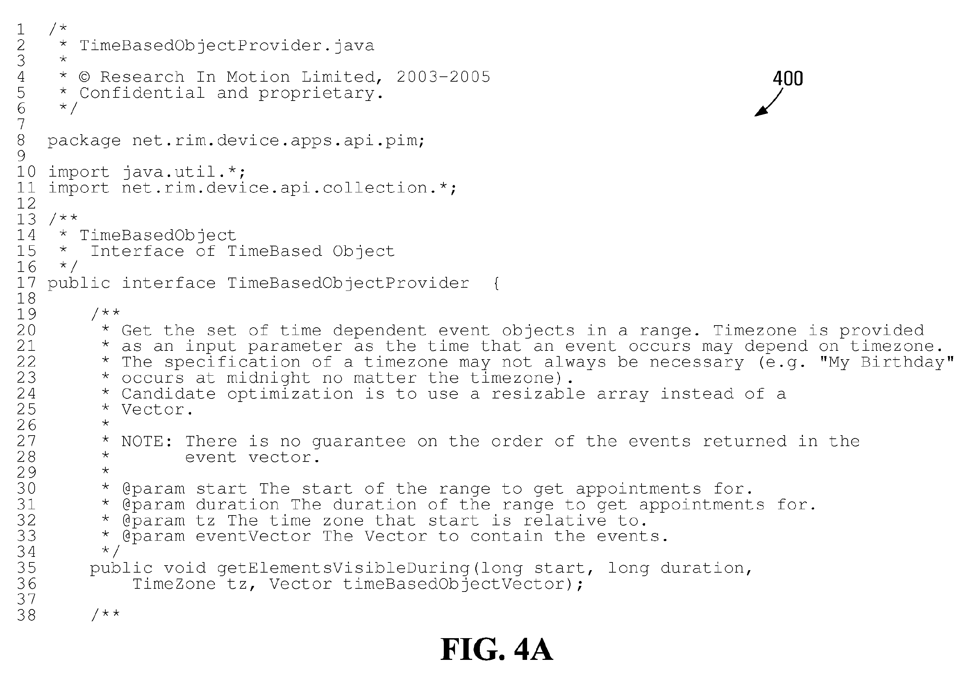

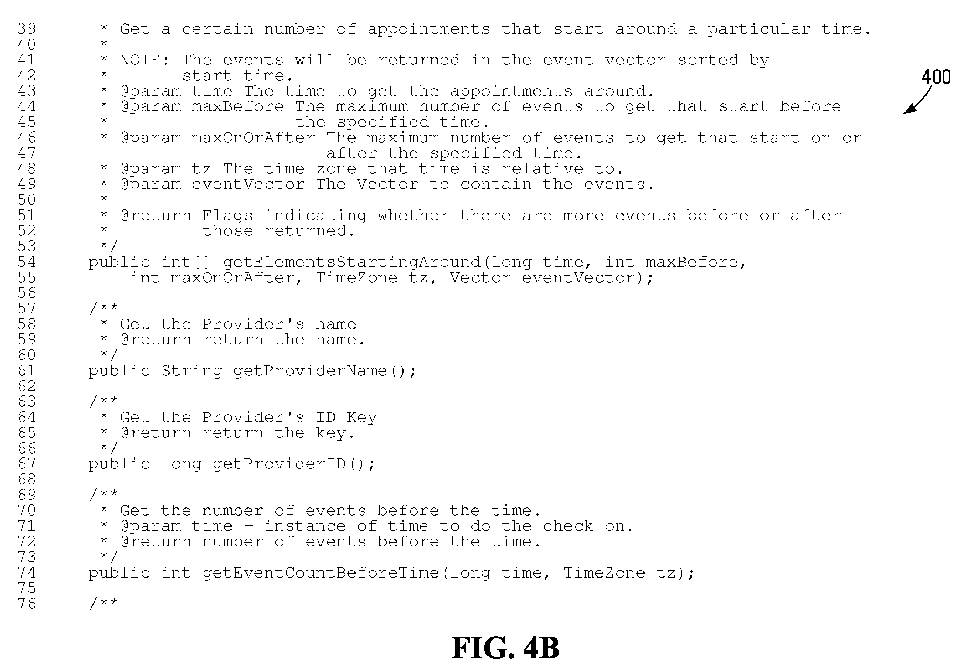

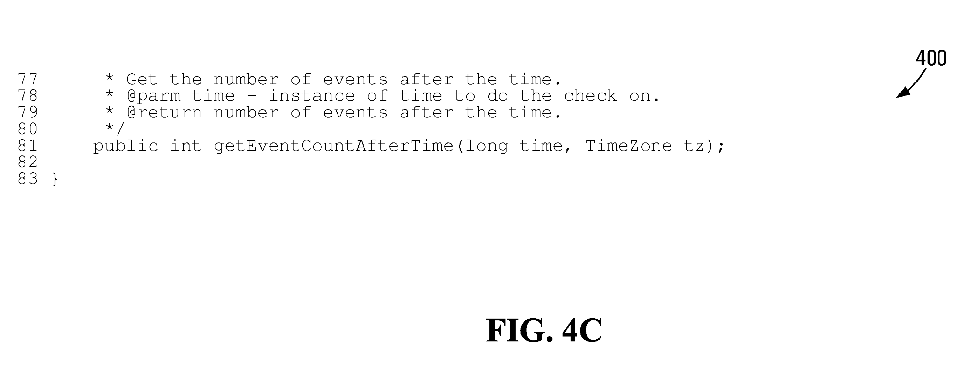

At the data gathering layer 304, the time based collection object 204 serves as a single source for time dependent event objects, regardless of type, for the calendar display code 202 of presentation layer 302. In short, the purpose of time based collection 204 is to promptly return a list of time dependent event objects meeting a set of constraints (such as falling within specified time range), on demand, in an ordered list, so that the events may be rendered at the presentation layer 302 as quickly as possible. In the present embodiment, time based collection 204 is an instance of a time based collection class which extends a time based object provider Java™ interface. As is known in the art, a Java™ interface is essentially a set of requirements to be met by a class which implements (conforms to) the interface. The time based object provider interface is illustrated in FIGS. 4A, 4B and 4C.

As illustrated, the time based object provider interface 400 of FIGS. 4A, 4B and 4C includes definitions of a getElementsVisibleDuring() method, a getElementsStartingAround() method, a getProviderName() method, and a getProviderID() method. As is well-known in the art, a method is a form of routine.

Referring to FIG. 4A, the getElementVisibleDuring() method definition (lines 35-36) defines a method whose purpose is to return all time dependent event objects within a specified time range. The getElementVisibleDuring() method definition has three input parameters and one output parameter. The first input parameter, start, defines a starting time for the time range of interest. The second input parameter, duration, defines the duration of the time range of interest. The third input parameter, tz, defines a time zone for the start time so as to uniquely identify the start time. The output parameter, timeBasedObjectVector, is a Java™ vector (a dynamically sized array) of time dependent event objects which fall within the specified time range.

Referring to FIG. 4B, the getElementStartingAround() method definition (lines 54-55) defines a method whose purpose is to return time dependent event objects starting around a particular time. The getElementStartingAround() method definition has four input parameters and one output parameter. The first input parameter, time, defines a time around which time dependent event objects are to be returned. The second input parameter, maxBefore, defines a maximum number of time dependent event objects to identify prior to the time zone of the time parameter. The third input parameter, maxOnOrAfter, defines a maximum number of time dependent event objects to identify on or after the time of interest. The fourth input parameter, tz, defines a time zone so as to uniquely identify the time zone of interest. The output parameter, eventVector, is a vector of time dependent event objects starting around the specified time whose number meets the constraints set by the maxBefore and maxOnOrAfter parameters. The rationale for requesting a specific number of events around a particular start time may be to support an "agenda" view in the calendar display code 202 in which events are displayed not as blocks within a calendar view, but as rows within a table which is only capable of displaying a maximum number of events at one time (e.g. due to size limitations of the display 16 (FIG. 1)).

The getProviderName() method definition (line 61 of FIG. 4B) defines a method by which the implementer of the time based object provider interface (e.g. time based collection 204 of FIG. 3) may return a string indicating the implementer's name. In the case of time based collection 204, the returned name is a delimited string including the names of all of the collections (collections 206, 208) in the data storage layer 206 which have registered with the time based collection 204. As will be described, these names are used at the presentation layer 302 for querying the user as to the types of events that should be displayed by the calendar viewing application 130C.

The getProviderID() method definition (line 67 of FIG. 4B) defines a method by which the implementer of the time based object provider interface may return an ID (e.g. a 64-bit value) uniquely identifying the implementer. Although this method may be implemented by time based collection 204, the ID returned by collection 204 is less central to the operation of calendar viewing application 130C than the IDs returned by other implementers of the time based object provider interface, namely collections 206 and 208, in the data storage layer 306 (FIG. 3). The latter IDs are compiled and stored by collection 204 in a collection ID list 308 (FIG. 3) to facilitate access to collections 206 and 208, as will be described.

Referring back to FIG. 3, methods in time based collection object 204 which are implementations of methods defined in the time based object provider interface of FIGS. 4A, 4B and 4C are illustrated with a bold border. As will be described, each of the implementations of object 204 invokes implementations of the same methods in collections 206 and 208 at the data storage layer 306 to achieve its objectives.

Referring still to FIG. 3, the time based collection 204 further defines a registerProvider() method 310 and an activateProvider() method 312. The registerProvider() method 310 is intended for invocation by collections at the data storage layer 306 on startup, for purposes of apprising the time based collection 204 of their existence. The activateProvider() method permits a collection at the data storage layer 306 to elect whether its time dependent event objects will be communicated to the time based collection 204 for display by the calendar display code 202.

The time based collection 204 of FIG. 3 further includes a time interval event cache 314. The time interval event cache 314 stores lists of time dependent event objects which were recently provided to the calendar display code 202. The rationale for maintaining the time interval event cache 314 is to improve the response time of calls to the getElementsVisibleDuring() and getElementsStartingAround() methods of collection 204 as the calendar viewing application 130C is used over time, as will be described. Less recently requested event objects within the cache may be deleted over time as more recently requested objects are stored.

At data storage layer 306, collection objects 206 and 208 (described above) store collections of time dependent event objects created by appointment scheduling code 214 and task scheduling code 216. Each of collections 206 and 208 may be thought of (at least in part) as a table within a structured query language database.

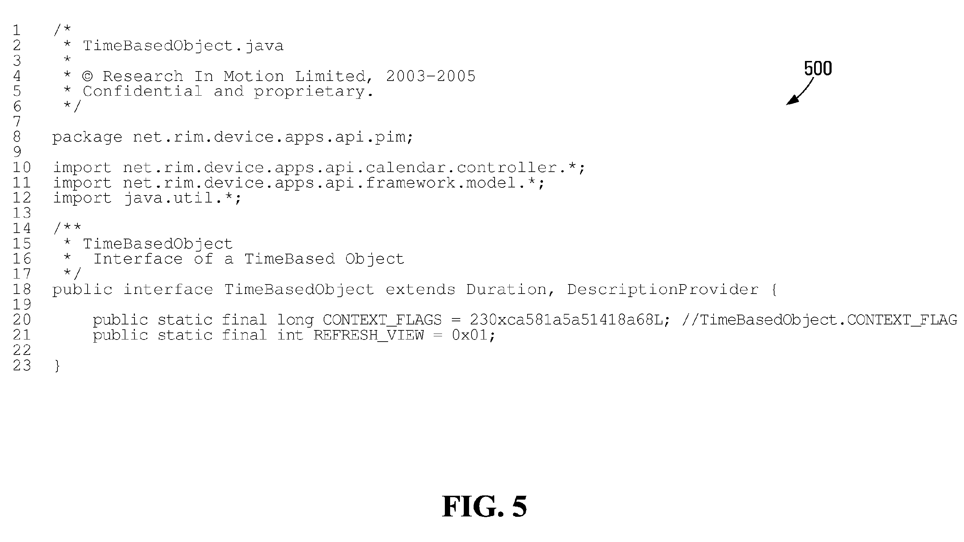

Referring to appointment collection 206, each of the appointment event objects A1, A2, ..., AN contained therein is an instance of an appointment class (analogous to a row in a SQL table). The appointment class has appointment-specific fields, such as an appointment meeting place for example. For uniformity with other types of event objects, however, the appointment class also extends a time based object interface 500, which is illustrated in FIG. 5.

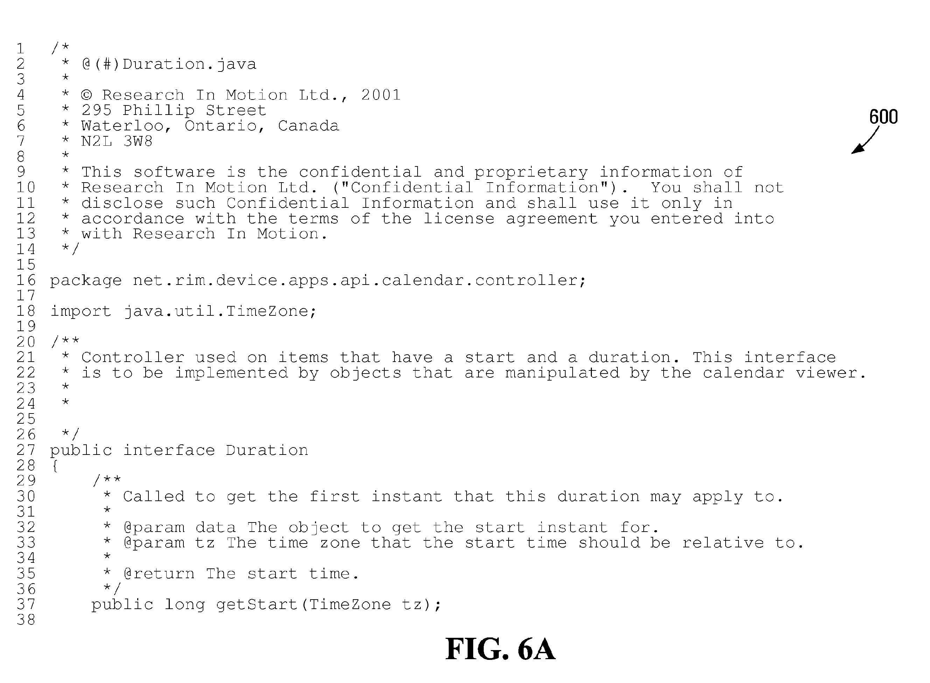

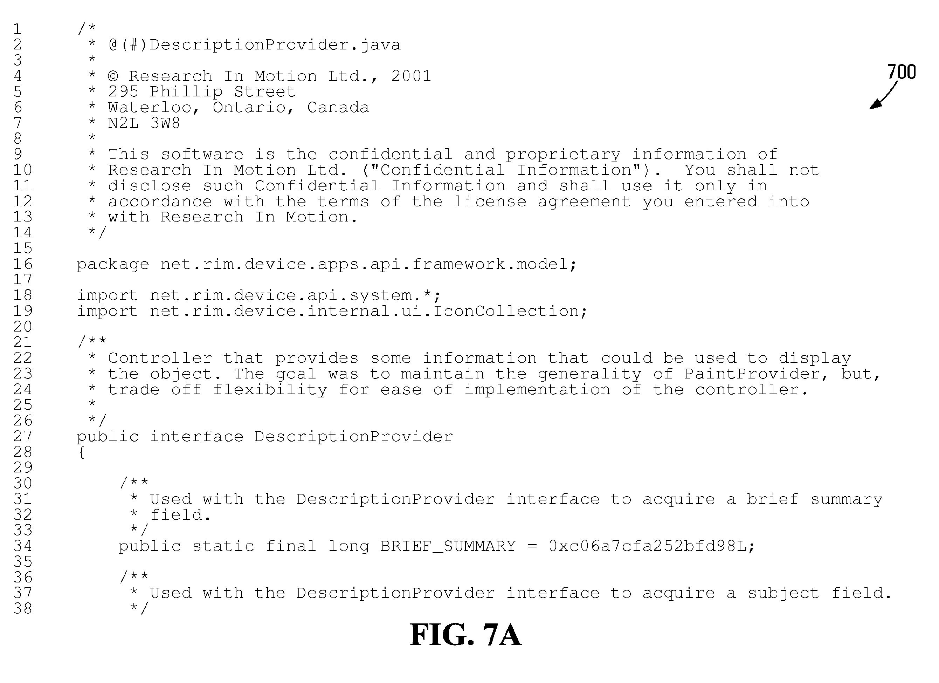

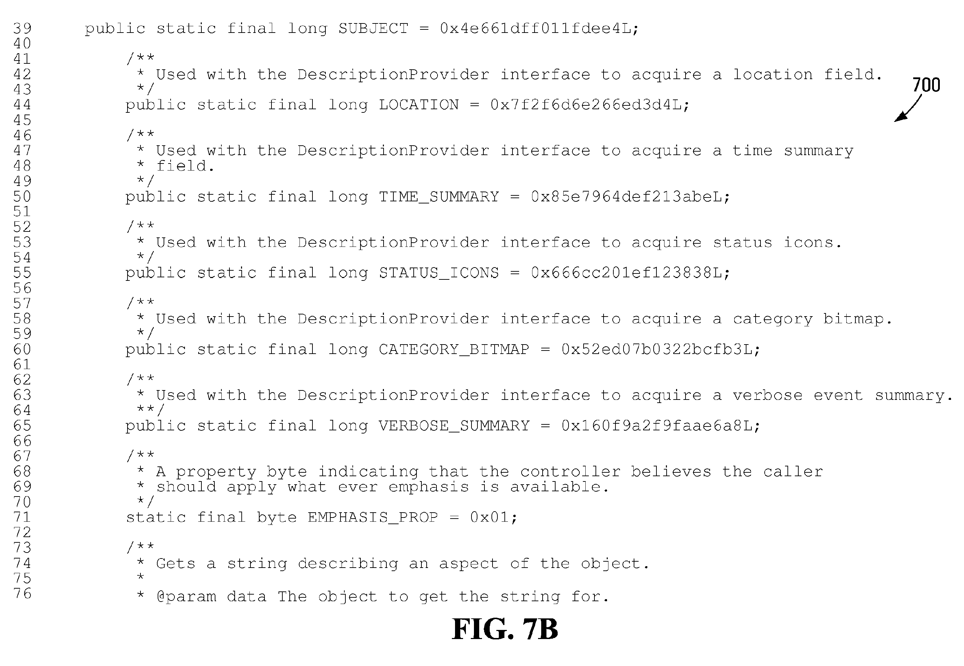

As illustrated at line 18 of FIG. 5, the time based object interface 500 extends two other interfaces, namely, the duration interface and the description provider interface. These are illustrated in FIGS. 6A-6B and 7A-7D respectively.

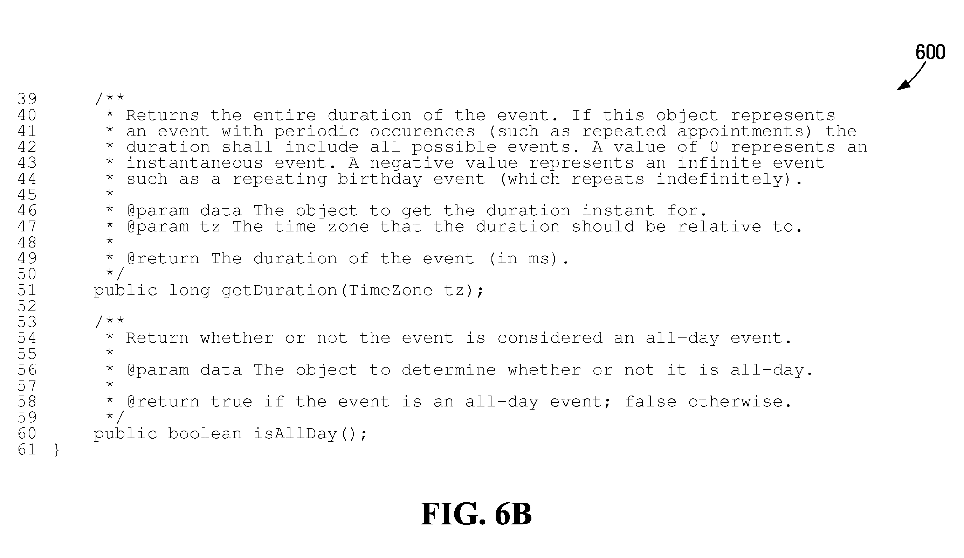

Referring to FIGS. 6A-6B, the duration interface 600 defines a getStart() method, a getDuration() method and an isAlIDay() method. The getStart() method (line 37 of FIG. 6A) returns a start time for a time dependent event. The sole input parameter, tz, defines a time zone for the returned start time. The getDuration() method (line 51 of FIG. 6B) returns the entire duration of the time dependent event. In the present embodiment, values of 0 indicate instantaneous events (e.g. task deadlines) and negative values represent infinite events, i.e. events which repeat with no known conclusion (e.g. birthdays). The isAllDay() method returns a boolean value indicating whether the event is considered to be an all-day event.

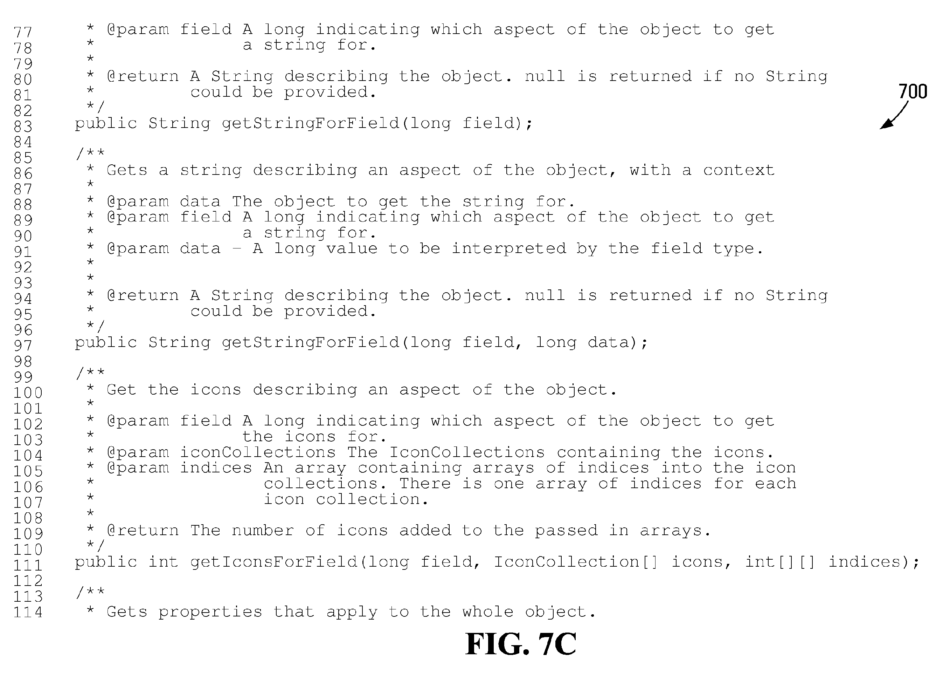

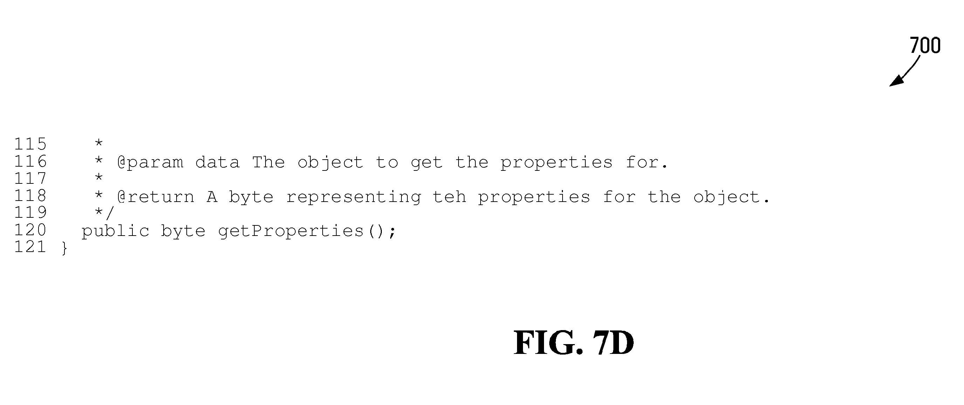

Turning to FIGS. 7A-7D, the description provider interface 700 defines two getStringForField() methods, a getlconsForField() method, and a getProperties() method. The getStringForField() methods (lines 83, 97 of FIG. 7C) return a string which describes a particular aspect of a time dependent event. The methods take an input parameter field which identifies the aspect of the object for which to return a descriptor string (e.g. brief summary, subject, location, time summary or verbose summary). The latter getStringForField() method (line 97 of FIG. 7C) also take a data input parameter which provides a context for the field. The getlconsForField() method (line 111 of FIG. 7D) returns icons which may be used to represent the event or aspects of the event. The method takes an input parameter field which identifies the aspect of the object for which to return icons (e.g. status icons or category bitmap). The method provides a first output parameter, icons, which is an array of icon collections (i.e. sets of icons), and a second output parameter, indices, which is an array containing arrays of indices into the icon collections. The getProperties() method (line 120 of FIG. 7D) returns a byte representing the properties of the event object.

Each of the appointment event objects A1, A2, ..., AN of appointment collection 206 (FIG. 3) implements the above-described methods so as to return results which are appropriate for appointment event objects (e.g. the getDuration() method for an appointment object will generally not return 0 because appointments are generally scheduled to have a non-zero duration).

Appointment collection 206 further includes a cache 320. Like the time interval event cache 314 of time based collection 204, the cache 320 of appointment collection 206 stores lists of recently provided time dependent event objects. However, in the case of cache 320, the only type of event objects which are cached are appointment event objects. Moreover, the objects that are stored are ones which were recently provided to the time based collection 204, not calendar display code 202. The rationale for maintaining the cache 320 in collection 206 is similar to the rationale for maintaining the time interval event cache 314 in collection 204: to improve the response time of calls to the getElementsVisibleDuring() and getElementsStartingAround() methods. A separate cache 320 is maintained within the appointment collection 206 because some of the appointment objects A1, A2, ..., AN within the appointment collection 206 may be recurring appointments (e.g. a one-hour meeting at 9 AM on the first Tuesday and Thursday of every month, except October, when only the Tuesday meeting should take place), which must first be expanded (i.e. converted to multiple instances of appointment objects with specific dates, times and durations) before they can be displayed. Because the expansion process can be computationally intensive, expanded appointment objects are stored in cache 320 for possible future reference. Less recently expanded appointment objects within the cache may be deleted over time as more recently expanded appointment objects are stored.

Task collection 208 is analogous to appointment collection 206 except that it stores task event objects T1, T2, ..., TN, rather than appointment event objects. Each of the task event objects extends the time based object interface 500 of FIG. 5 and thus implements the various methods of the duration interface 600 and description provider interface 700 described above in conjunction with FIGS 6A-6B and 7A-7D. The implementations will be appropriate for task event objects. For example, most tasks will return a duration of zero, because a deadline for a task is typically instantaneous. Another distinction of task collection 208 is that, unlike appointment collection 206, task collection 208 lacks a cache. This is due to the fact that tasks are comparatively simple, rarely (if ever) requiring expansion like recurring appointments. Thus, even without a cache, task event objects T1, T2, ..., TN meeting a specified set of constraints may simply be identified and returned as needed to time based collection 204 without a significant performance penalty.

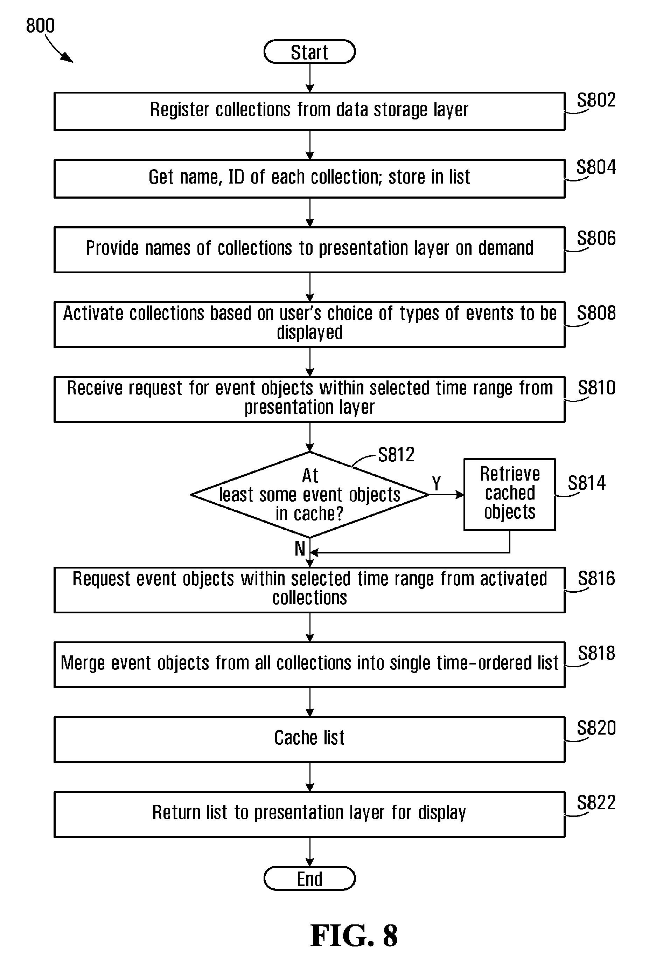

Operation 800 of the calendar viewing application 130C for displaying different types of time dependent events, in this case in a calendar view, is illustrated in FIG. 8. It will be appreciated that operation 800 is performed by the time based collection 204 (FIG. 3), which operates in the data gathering layer 304 as the intermediary between the components at the presentation layer 302 and the data storage layer 306.

For purposes of FIG. 8, it is assumed that bytecode files representative of: calendar display code 202 and time based collection 204; appointment collection 204; and task collection 208; have been stored in the memory 116 of device 10, and that each of these executable files has been invoked by way of a Java™ virtual machine at device 10 (not illustrated). Moreover, upon their invocation, appointment collection 204 and task collection 208 have read their corresponding appointment data 210 and task data 212 from file (FIG. 2), resulting in the instantiation of appointment event objects A1, A2, ..., AN at collection 206 and task event objects T1, T2, ..., TN at collection 208 (FIG. 3).

Initially, each of the collections 206 and 208 invokes the registerProvider() method 310 of time based collection 204 (FIG. 3) to apprise the latter collection of its existence (S802 of FIG. 8). These dynamic registrations notify time based collection 204 that time dependent event objects from collections 206 and 208 should be included in the display at the presentation layer 302. Invocation of the registerProvider() method 310 implicitly activates the relevant type of time dependent event within the view, as could be done by an express call to the activateProvider() method 312 (described below).

Following registration, the time based collection 204 invokes the getProviderName() and getProviderID() methods of each of the registered collections 206 and 208, and compiles the result into the collection ID list 308 (S804). The compiled names may for example be "Appointments" and "Tasks", and the compiled IDs are unique identifiers of the collections 206 and 208. These names are in turn provided to the calendar display code 202, upon its invocation of the getProviderName() method of time based collection 204 (S806). This invocation may occur, for example, any time that the user interacts with the GUI presented on display 16 of device 10 so as to select the types of time dependent events that should be displayed (e.g. appointments, tasks, or both). In the present example, it is assumed that the user wishes for both appointments and tasks to be displayed, and that the user has accordingly interacted with the GUI presented by the calendar display code 202 to effect this preference to effect this preference (e.g. has checked checkboxes next to the names "Appointment" and "Tasks" or selected these names from a drop-down list). Based on this preference, the activateProvider() method 312 of the time based collection 204 (FIG. 3) is invoked to activate each collection whose events are to be displayed (S808). The activateProvider() method 312 takes two input parameters, namely, an ID parameter which uniquely identifies the collection from the data storage layer 306 to be activated or deactivated, and an activate parameter, which is a boolean value indicating whether the time dependent event objects of the identified collection should be displayed at the presentation layer 302 (i.e. activated) or not be displayed (i.e. deactivated). Thus, the method 312 would be called twice, once specifying the ID for collection 206 and a second time specifying the ID for collection 208, with the activate parameter being set to "true" both times.

At the presentation layer 302 (FIG. 3), the user is now assumed to interact with the GUI presented by the calendar display code 202 to select a time window of interest. The user may for example select a weekly calendar view which includes the current date, e.g. March 17 of the current year, thereby effectively requesting the display of all time dependent events the third week of March. Logic within the calendar display code 202 automatically translates these actions into an invocation of the getElementsVisibleDuring() method of the time based collection 204 with appropriate input parameters (start time, duration, and time zone) for requesting a list of all time dependent event objects falling within the third week of March (S81 0 of FIG. 8).

At the data gathering layer 304 (FIG. 3), when the getElementsVisibIeDuring() method of time based collection 204 is invoked, logic within that method initially checks whether the time interval event cache 314 contains time dependent event objects for the third week of March (S812 of FIG. 8). This may be true if, prior to the instant request, the user had previously requested a display of events occurring during that week. If that were the case, the cached objects would be retrieved (S814). In the present example, however, it is assumed that no such previous request was made and that the cache 314 is therefore devoid of event objects falling within the time range of interest. Accordingly, logic within the getElementsVisibIeDuring() method of time based collection 204 method invokes the getElementsVisibleDuring() method of each of appointment collection 206 and task collection 208 in turn, in order to obtain lists of appointment event objects and task event objects (respectively) falling within the time range of interest (S816). Execution of S816 may be skipped if the time interval event cache 314 contains all of the events for the time range of interest.

At the data storage layer 306 (FIG. 3), invocation of the getElementsVisibleDuring() method of appointment collection 206 initially triggers an examination of the cache 320 local to that collection for appointment event objects falling within the third week of March. The cache 320 may contain such appointment objects if there had been a recent request for appointment objects falling within the third week of March. In the present example, however, it is assumed that the cache 320 is initially empty. Accordingly, logic within the getElementsVisibleDuring() method of appointment collection 206 proceeds to identify any appointments falling within that time range. Appointment event objects representative of these appointments are added to a time-ordered list which is returned to time based collection 204 in the form of output parameter timeBasedObjectVector of the getElementsVisibleDuring method(). These returned appointment event objects are also cached in local cache 320, for possible future reference. In the present embodiment, all appointments (not just those which have been expanded) are cached.

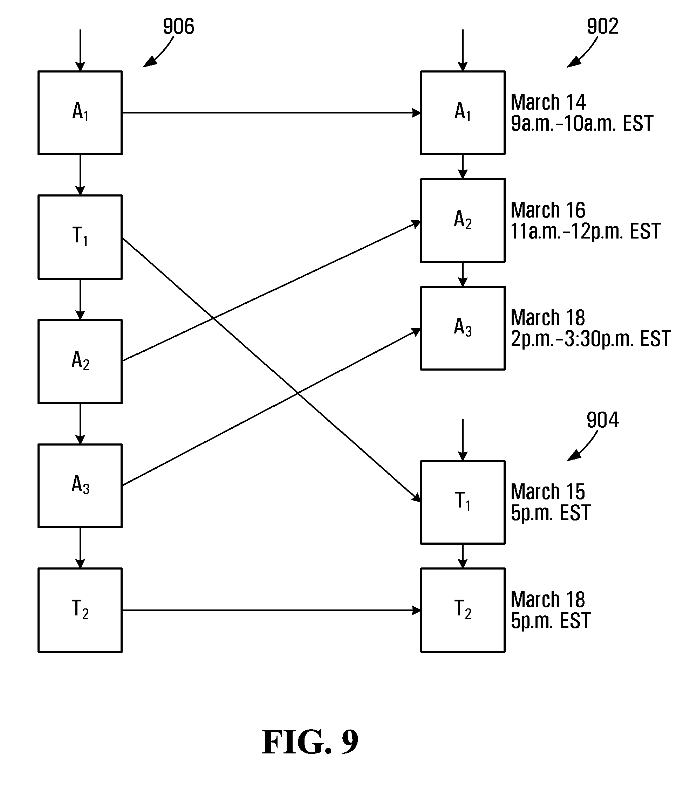

The resultant list of appointment event objects 902 is illustrated in FIG. 9. As illustrated, three appointment event objects, A1, A2, and A3, are returned. In FIG. 9, the start times and durations of each appointment is indicated next to the appointment object. The appointments of list 902 are ordered by appointment start time.

Subsequent invocation of the getElementsVisibleDuring() method of task collection 208 results in the return of a similar list of task event objects falling due within the third week of March. One distinction is that no cache is initially checked for task event objects, and no storage of returned task event objects to cache, is performed, as the task collection 208 lacks a cache. The resultant list of task event objects 904 is illustrated in FIG. 9. The list includes two event objects, T1 and T2, ordered sequentially by deadline. The deadline for each task is indicated in FIG. 9 next to the task.

When the two lists 902 and 904 of FIG. 9 are returned to the time based collection 204 (as reflected by arrows 320 and 322 of FIG. 3), logic within the getElementsVisibleDuring() method of that collection proceeds to merge the lists into a single time-ordered list 906 by way of a merge sort algorithm (S818, FIG. 8). The list 906 is an "overlay list" which points to data members in each of the other lists 902 and 904. The overlay list 906 may be thought of as a "list of pointers" indexing into the other lists 902 and 904, as shown in FIG. 9. In the present embodiment, the event objects appearing within lists 902, 904 are actually stored in the collections 206, 208 respectively; the pointers in list 906 therefore refer to those objects. This avoids duplication of objects at the data gathering layer 304. The event objects are time-ordered in list 906 by a time-ordering criterion, which in the present example is based on the start time for appointment objects but the deadline for task objects. As a result, the resulting list 906 may interleave event objects from the lists 902 and 904, as shown in FIG. 9. The list 906 is cached in time interval event cache 314 (S820, FIG. 8) then returned to the calendar display code 202 (as reflected by arrow 324 of FIG. 3) for display at the presentation layer 302 (S822).

To cause the events within the returned list 906 to be displayed within a calendar view, the calendar display code 202 uses information regarding the selected view, such as the time range being displayed and the associated granularity of time slots within that window, along with information from each of the event objects within the returned list, such as start time and duration, to determine a location at which the event should rendered within the calendar view. Using this information, the time dependent event object is instructed to render itself at the appropriate location within the view. In the present embodiment, each event object, regardless of type (e.g. appointment, task, or otherwise) have a method, e.g. drawSelf(), which causes the object to render itself. This may be achieved through common base classes for each event object for example. In the result, the presentation layer 302 need not concern itself with low level details of rendering different types of time dependent events.

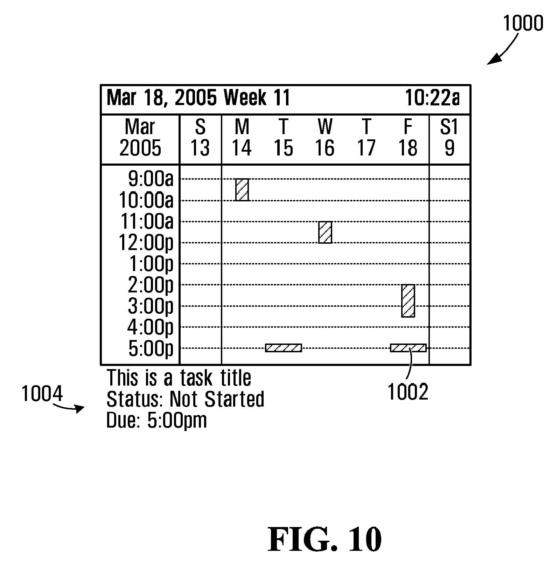

The rendered visual representation of each event object may have some aspects in common, for consistency. For example, each event object may appear as a rectangular bar whose length is commensurate with the duration of the event. However, to facilitate the visual distinction of different types of events at a glance, the appearance of each type of event may be different in some respects (e.g. appointments may be rendered in green while tasks are rendered in blue). The object may further be instructed to display a particular textual description for display upon selection of the associated rectangular bar in the user interface, e.g. using a cursor. In the case of a task event, the description may for example be a title given to the task upon its creation by task scheduling application 130E, as well as a start date, due date, and recurrence pattern description. As shown in FIG. 10, the GUI 1000 generated by the calendar display code 202 may present the description associated with a selected event 1002 in a field 1004. Time dependent event objects may decide for themselves how to describe themselves, independently of the calendar display code 202.

If it were desired for the calendar display code 202 to display time dependent event data objects from another application, such as a time shift application which keeps track of employee time shifts, this could be achieved without difficulty. The time shift application could simply be implemented according to the same model as the appointment scheduling application 130D and task scheduling application 130E. In other words, the new time shift application could implement a collection at the data storage layer 306 (FIG. 3) which also extends the time based object provider interface of FIGS. 4A-4B. Moreover, the time shift event objects which the collection maintains could extend the time based object interface of FIG. 5. When the resultant time shift collection is compiled to byte code, stored in memory 116 of the device 10 and executed by the JVM, the runtime method resolution capabilities of the JVM will permit the new collection to register with the time based collection 204 by execution of the registerProvider() method 310 (FIG. 3). The subsequent treatment of the new time shift collection by the time based collection 204 will be the same as its treatment of appointment collection 206 and task collection 208. The new collection's getProviderName() method will be called, and the returned name (e.g. "time shift") will be provided to the presentation layer 302 by way of the getProviderName() method of the time based collection 204. When the user is asked to select the types of events to be displayed in the calendar view, a new option, "time shift", will appear. If selected, any time shift events occurring during the currently selected time window (or otherwise meeting the currently operative set of constraints for displaying time dependent events) will suddenly appear in the calendar view. Advantageously, no recompilation or redeployment of the existing calendar viewing application 130C to device 10 is necessary.

It will be appreciated that the set of constraints that is applied for the purpose of generating the desired list of time dependent event objects 906 (FIG. 9) is not necessarily a time range within which each event must occur. For example, the set of constraints could alternatively be a fixed number of events immediately preceding, or immediately following, a specified time. Such a set of constraints may be appropriate if user has selected an agenda view for the calendar viewing application 130C, in which view the number of events capable of being displayed (in tabular form) at one time is limited to a maximum number N. In this case, the getElementsStartingAround() method may be invoked at S810 rather than the getElementsVisibleDuring() method, and operation at S816 may similarly invoke the getElementsStartingAround() method, not the getElementsVisibleDuring() method, of the collections 206 and 208 at the data storage layer 306.

A person skilled in the art will appreciate that other sets of constraints for time dependent event objects could be specified. The constraints may be based upon the capabilities of the calendar display code 202. For example, if events are capable of being ordered in the GUI based of their duration, the calendar display code 202 may request a number of event objects based on their duration. In this case, the time based object provider interface (FIGS. 4A-4B) may include a new method definition, perhaps called getElementsHavingDuration(), which might be implemented by collections 204, 206 and 208 to effect the desired, duration-based event object selection criteria. In such cases, it may be desirable for the time-ordering criterion of the resultant master list 906 (FIG. 9) to be different (e.g. also based on event duration).

As will be appreciated by those skilled in the art, modifications to the above-described embodiment can be made without departing from the essence of the invention. For example, the use of Java™ interfaces to promote uniformity between collections at the data storage layer 306 and uniformity between time dependent event objects between collections is not required. Other approaches for promoting uniformity, such as the use of common base classes (possibly accompanied by the overriding of subclass methods as necessary to achieve distinct behavior, e.g., for methods such as getElementsVisibleDuring() or getElementsStartingAround()), could be used.

Is should also be appreciated that lists of time dependent event objects (e.g. lists 902, 904 and 906 of FIG. 9) need not be implemented with Java™ vectors. Other data structures, such as traditional arrays, could be employed. Moreover, in some embodiments, the lists 902, 904 may not be ordered lists.

Alternative embodiments may be wholly implemented using programming languages other than Java™.
Other modifications will be apparent to those skilled in the art and, therefore, the invention is defined in the claims.

### COPYRIGHT NOTICE

A portion of the disclosure of this patent document contains material which is subject to copyright protection. The copyright owner has no objection to the facsimile reproduction by any one of the patent document or patent disclosure, as it appears in a Patent Office patent file or records, but otherwise reserves all copyright rights whatsoever.

## Claims

1. A computer-implemented method comprising:
receiving a set of constraints for selecting objects representative of time dependent events (A₁, A₂, ..., AN; T₁, T₂, ..., T_{N});
requesting from each of a plurality of software objects a set of time dependent event objects (A₁, A₂, ..., AN; T₁, T₂, ..., T_{N}) meeting said set of constraints, each software object maintaining a distinct set of time dependent event objects (A₁, A₂, ..., AN; T₁, T₂, ..., T_{N}) representing a distinct type of time dependent event; merging each said set of time dependent event objects (A₁, A₂, ..., AN; T₁, T₂, ..., T_{N}) into a time-ordered list (906) based on a time-ordering criterion that is dependent on the represented type of time dependent event; and
providing said time-ordered list (906) to a software module (202) for displaying, in a graphical user interface (1000), a visual representation of the time dependent event objects of said time-ordered list.

2. The method of claim 1 wherein a software object of said plurality of software objects maintains a set of appointment event objects (A₁, A₂, ..., AN), each appointment event object containing a respective start time value and a respective stop time value, and wherein said time-ordering criterion is, for appointment event objects, based on their respective start time values.

3. The method of claim 1 or claim 2 wherein a software object of said plurality of software objects maintains a set of task event objects (T₁, T₂, ..., T_{N}), each task event object containing a respective deadline, and wherein said time-ordering criterion is, for task event objects, based on their respective deadlines.

4. A machine-readable medium (116) containing code for execution at a computing device, said code being executable in a processor of said computing device for implementing the method of any one of claims 1 to 3.

5. The machine readable medium (116) of claim 4, wherein the computing device comprises a wireless communication device (10).

6. A computer program product comprising the machine readable medium (116) of claim 4 or claim 5.

7. A wireless communication device (10) comprising the machine readable medium (116) of claim 6.

8. A communication system comprising a plurality of wireless communication devices (10) of claim 7.
